# EUROPEAN PATENT SPECIFICATION

(11) **EP 3 117 417 B1**
(45) Date of publication and mention of the grant of the patent: **20.12.2017**
(21) Application number: 15711971.0
(22) Date of filing: 09.03.2015
(51) Int. Cl.: G08C 17/02

(54) **REMOTE DEVICE CONTROL VIA GAZE DETECTION**
STEUERUNG EINER ENTFERNTEN VORRICHTUNG MITTELS BLICKERFASSUNG
COMMANDE DE DISPOSITIF À DISTANCE PAR DÉTECTION DE REGARD

(30) Priority: 12.03.2014 US 201414207255
(43) Date of publication of application: 18.01.2017
(73) Proprietor: Microsoft Technology Licensing, LLC, Redmond, WA 98052-6399 (US)
(72) Inventor: WILAIRAT, Weerapan, Redmond, Washington 98052-6399 (US); THUKRAL, Vaibhav, Redmond, Washington 98052-6399 (US); EDEN, Ibrahim, Redmond, Washington 98052-6399 (US); NISTER, David, Redmond, Washington 98052-6399 (US)
(74) Representative: Goddar, Heinz J.
(86) International application number: PCT/US2015/019346
(87) International publication number: WO 2015/138271

(56) References cited:
- US-B1- 8 560 976

## Description

### BACKGROUND

As technology progresses, people use increasing numbers of electronic devices on a daily basis. For example, a person may interact frequently with a smartphone, a video game console, a home-entertainment system, and numerous other electronic devices. To derive the greatest advantage from these devices, the user must actively control them. However, control of many devices may require the user to move from one device to another, to navigate a different user interface on each device, or to keep several remote-control transmitters on hand. US 8 560 976 B1 discloses on a computing system comprising a gaze direction detector, a method for gaze-based remote control of a remotely controllable electronic device within an environment, the method comprising: detecting via data from the gaze direction detector a gaze direction of a user, detecting an indication from the user to control a remotely controllable device located in the gaze direction of said electronic device, adapting a user interface of a controller device to enable user control of the remotely controllable device, receiving input from the user interacting with the user interface of the controller device via touch input and transmitting a signal to the remotely controllable device based upon the input received to control the remotely controllable device

### SUMMARY

The present invention provides a method according to claim 1 and a system according to claim 10.

The respective dependent claims relate to special embodiments thereof.

### BRIEF DESCRIPTION OF THE DRAWINGS

FIG. 1 shows aspects of an example environment in which a user may remotely control electronic devices in accordance with an embodiment of this disclosure.
FIG. 2 is a high-level schematic diagram showing aspects of a computer system and interconnected systems in accordance with an embodiment of this disclosure.
FIGS. 3 shows aspects of a wearable display system in accordance with an embodiment of this disclosure.
FIG. 4 shows aspects of a right or left optical system of the wearable display system of FIG. 3, in accordance with an embodiment of this disclosure.
FIG. 5 illustrates an example method to enable a user to remotely control electronic devices in accordance with an embodiment of this disclosure.
FIG. 6 illustrates navigating a user interface of for remotely controllable device via gaze or hand gesture in accordance with embodiments of this disclosure.

### DETAILED DESCRIPTION

The embodiments disclosed hereinmay enable a user to remotely control numerous electronic devices in an intuitive manner. In one approach, the user selects a device to control simply by gazing at it. When the system determines that the user's intention is to control a certain device, it displays a user interface specific to the device, or otherwise adapts an existing user interface to enable control of the device. The user's input is then received through the user interface, and appropriate control signals are transmitted to effect control.

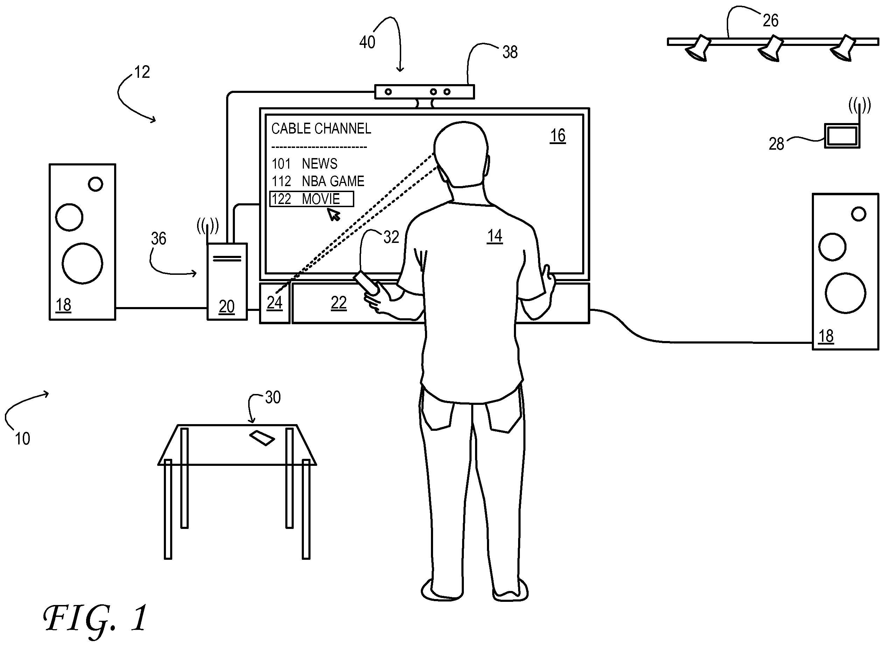

FIG. 1 shows aspects of an example environment lOin the form a living room or family room of a personal residence. However, the systems and methods described herein are also applicable in other environments, such as retail and service environments. The environment of FIG. 1 features a home-entertainment system 12 for the enjoyment of user 14. In FIG. 1, user 14 is shown in a standing position; in other scenarios, the user may be seated or lying down.

Home-entertainment system 12 includes a large-format display 16 and loudspeakers 18, both operatively coupled to computer system 20. In addition, the home-entertainment system includes an audio-video (AV) receiver 22 and a cable box 24. It will be understood that the illustrated home-entertainment system is provided by way of example, and that the disclosed embodiments may be utilized with any other suitable configuration of devices. In some configurations, for example, display 16may be replaced by a near-eye display incorporated in headwear or eyewear worn by the user.

Continuing in FIG. 1, environment 10 includes various electronic devices other than those of home-entertainment system 12, which user 14may control. Such devices include room lighting system26 and thermostat 28, as examples. The illustrated environment also includes a mobile computing device30, such as a smartphone, tablet computer, etc.

Environment 10 may also include one or more electronic devices configured to control other electronic devices in the environment. In FIG. 1, for example, user 14 is shown holding a universal remote control transmitter 32. The universal remote control transmitter may be configured to transmit appropriate control signals (infrared, radio, Bluetooth, etc.) to the remotely controllable devices in the environment-e.g., display 16, AV receiver 22, cable box 24, room lighting system26, thermostat 28, smart phone 30, and/or computing device 20,among others. In some embodiments, other devices, such as mobile computing device 30, also may be used as a controller device.

As noted above, the embodiments disclosed herein allow the user 14 to select an electronic device to be controlled simply by gazing at it. To this end, computer system 20comprises data that defines where, in environment 10, the remotely controllable electronic devices are situated. In some embodiments, at least a portion of this data may be acquired through an environment imaging system. In other embodiments this data may be acquired by user input, as described below. Further, computer system 20 may comprise data for adapting a user interface of a controller device to allow a user to conveniently control the remotely controllable device via the controller device. In the depicted embodiment, a user interface for cable box 24 is displayed in response to detecting the user's gaze at the cable box. In other examples, the computing device may adapt a user interface of remote control 32, smart phone 30, or other suitable controller device useable to control a different remotely controllable device.

In some embodiments, an environment imaging system may include a depth camera or color camera. It may share the image-capture componentry of vision system 38, for example, and/or may include other image capture devices (not shown) in the environment. In some embodiments, the environment imaging system may be a held in the user's hand and walked through the environment to image the remotely controllable devices. In still other embodiments, the environment imaging system may be incorporated in eyewear or headwear worn by the user. Position-tracking componentry may enable the image data captured by the environment imaging system to be mapped to real-world coordinates. Through downstream analysis of the image data, the locations of the various remotely controllable devices may be established and stored on a map maintained in computer system20. The map may be accessed by gaze-tracking componentry, to determine whether the user is gazing at any of the remotely controllable devices. Despite the advantages afforded by environment imaging, this feature may be omitted in some embodiments, and alternative methods may be used to establish the locations of the remotely controllable devices within the environment.

Continuing, the nature of computer system 20 may differ in the different embodiments of this disclosure. In some embodiments, the computer system may be a video-game system, and/or a multimedia system configured to play music and/or video. In other embodiments, the computer system may be a general-purpose computer system used for internet browsing and productivity applications. Computer system 20may be configured for any or all of the above purposes, and/or any other suitable purposes, without departing from the scope of this disclosure.

Computer system 20 is configured to accept various forms of user input from one or more users. As such, user-input devices such as a keyboard, mouse, touch-screen, gamepad, or joystick controller (not shown in the drawings) may be operatively coupled to the computer system and used for direct input of data. Computer system 20 is also configured to accept so-called natural user input (NUI) from one or more users. To mediate NUI, an NUI system 36 is included in the computer system. The NUI system is configured to capture various aspects of the NUI and provide corresponding actionable input to the computer system. To this end, the NUI system receives low-level input from peripheral sensory components, which may include vision system 38 and listening system 40, among others (e.g. other cameras configured to image the environment).

Listening system 40 may include one or more microphones to pick up vocalization and other audible input from user 14and from other sources in environment 10-e.g., ringing telephones, streaming audio, and may comprise one or more microphones. In some examples, listening system 40 may comprise a directional microphone array. Vision system 38 is configured to detect inputs such as user gestures, eye location, and other body gesture and/or posture information via image data acquired by the vision system. In the illustrated embodiment, the vision system and listening system share a common enclosure; in other embodiments, they may be separate components. In still other embodiments, the vision, listening and NUI systems may be integrated within the computer system. The computer system and its peripheral sensory components may be coupled via a wired communications link, as shown in the drawing, or in any other suitable manner.

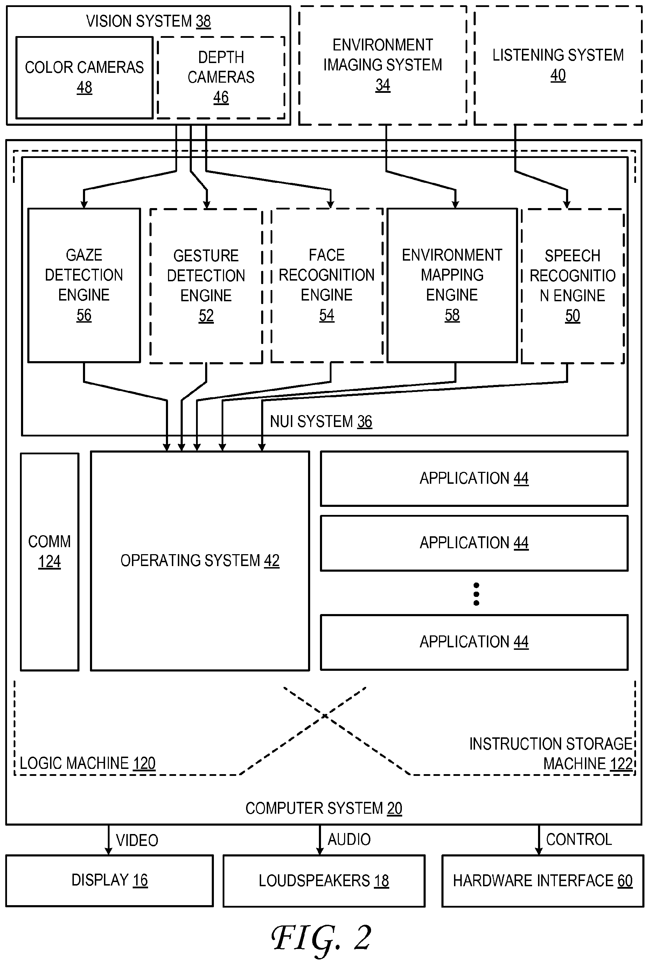

FIG. 2 is a high-level schematic diagram showing aspects of computer system 20 and peripheral systems in an example embodiment. The illustrated computer system includes operating system (OS) 42, which may be instantiated in software and/or firmware. The computer system also includes one or more applications 44, such as a video game application, a digital-media player, an internet browser, a photo editor, a word processor, and/or a spreadsheet application, for example. Any or all of computer system 20, vision system 38, listening system40, and environment imaging system 34(e.g. a camera external to vision system 38 that images the environment, such as from a different perspective) may include suitable data storage, instruction storage, and logic hardware, as needed to support their respective functions.

In the embodiment of FIG. 2, vision system 38includes one or more depth cameras 46 and one or more color cameras 48. Each depth camera may be configured to acquire a time-resolved sequence of depth maps of user 14 and environment 10. As used herein, the term 'depth map' refers to an array of pixels registered to corresponding regions (Xi, Yi) of an imaged scene, with a depth value Zi indicating, for each pixel, the depth of the corresponding region. 'Depth' may be defined as a coordinate parallel to the optical axis of the depth camera, which increases with increasing distance from the depth camera. Operationally, a depth camera may be configured to acquire two-dimensional image data from which a depth map is obtained via downstream processing.

In general, the nature of depth cameras46 may differ in the various embodiments of this disclosure. In one embodiment, brightness or color data from two, stereoscopically oriented imaging arrays in a depth camera may be co-registered and used to construct a depth map. In other embodiments, a depth camera may be configured to project onto the subject a structured infrared (IR) illumination pattern comprising numerous discrete features-e.g., lines or dots. An imaging array in the depth camera may be configured to image the structured illumination reflected back from the subject. Based on the spacings between adjacent features in the various regions of the imaged subject, a depth map of the subject may be constructed. In still other embodiments, a depth camera may project a pulsed infrared illumination towards the subject. A pair of imaging arrays in the depth camera may be configured to detect the pulsed illumination reflected back from the subject. Both arrays may include an electronic shutter synchronized to the pulsed illumination, but the integration times for the arrays may differ, such that a pixel-resolved time-of-flight of the pulsed illumination, from the illumination source to the subject and then to the arrays, is discernible based on the relative amounts of light received in corresponding elements of the two arrays.

Each color camera 48 may image visible light from the observed scene in a plurality of channels-e.g., red, green, blue, etc.-mapping the imaged light to an array of pixels. Alternatively, a monochromatic camera may be used, which images the light in grayscale. Color or brightness values for all of the pixels exposed in the camera constitute collectively a digital color image. In some embodiments, the pixels of the color camera may be registered to those of the depth camera. In this way, both color and depth information may be assessed for each portion of an observed scene.

NUI system 36 processes low-level input (i.e., signal) from vision system 38, listening system40, and environment imaging system 34 to provide actionable, high-level input to computer system 20. For example, the NUI system may perform sound- or voice-recognition on an audio signal from listening system 40. The voice recognition may generate corresponding text-based or other high-level commands to be received in the computer system. In the embodiment shown in FIG. 2, the NUI system includes a speech-recognition engine 50, a gesture-recognition engine 52, a face-recognition engine 54, a gaze detection engine 56, and an environment-mapping engine 58.

Speech-recognition engine 50is configured to process audio data from listening system 40, to recognize certain words or phrases in the user's speech, and to generate corresponding actionable input to OS 42 or applications 44 of computer system 20. Gesture-recognition engine 52is configured to process at least the depth data from vision system 38, to identify one or more human subjects in the depth data, to compute various skeletal features of the subjects identified, and to gather from the skeletal features various postural or gestural information, which is furnished to the OS or applications. Face-recognition engine 54is configured to process image data from the vision system to analyze the facial features of the current user. Analysis of the facial features may enable the current user to be identified-e.g., matched to a user profile stored in the computer system. Face-recognition engine 54 also may allow permissions to be implemented, such that users may be granted different levels of control based upon identity. As a more specific example, a user may choose not to allow the user's children to control a thermostat or other home system control, and facial recognition and/or other identification method may be used to enforce this policy. It will be understood that such permissions may be implemented in any other suitable manner.

Environment-mapping engine 58 is configured to assemble a map of environment 10, which includes the positions of the various remotely controllable electronic devices within the environment. The environment mapping engine may be configured to receive any suitable form of input to define such positions, including direct user input. In one example, the user may simply gaze in the direction of the device to be controlled and then identify the device situated there. The user may identify the device, for example, by calling out an identification of the device (e.g. a list of detected devices and their associated identifications may be displayed to the user), by entering the identification via a keyboard, keypad, game controller, or other input device, or in any other suitable manner. In this manner, each remotely controllable device is associated with its position. Further, during this process, pairing of the remotely controllable devices with the computing device may be accomplished, for example, by entering passwords for the devices to be remotely controlled or performing any other suitable pairing processes. The location and pairing information may be stored in non-volatile memory of the computer system and later used to determine which remotely controllable device the user intends to control, and also to communicatively connect to the device to be controlled. In another embodiment, the environment-mapping engine may receive input from environment imaging system 34. Accordingly, the environment-mapping engine may be configured to recognize various electronic devices based on their image characteristics (e.g., size, shape, color), based on a suitable identifying marker such as a bar code or logo or in any other suitable manner.

In other embodiments, the environment mapping engine may be operatively coupled a plurality of signal (e.g., radio or other suitable wavelength) receivers. The signal receivers may be configured to receive identification signals from transmitting beacons attached to the remotely controllable electronic devices in environment 10. With receivers distributed spatially within the environment, the environment mapping engine may be configured to triangulate the location of each remotely controllable electronic device and thereby create the map.

Continuing in FIG. 2, gaze detection engine 56 is configured to process data from vision system 38identify the user's head orientation and/or to locate one or more ocular features of the user. Such ocular features may include the pupil centers, pupil outlines, iris centers, iris outlines, and/or one or more specular reflections from known light sources (which may be referred to as "glints" from "glint sources") that reflect off the corneas of the user's eyes. Based on the head orientation or the positions of the ocular features, the gaze detection engine may estimate the user's gaze vectors and detect the direction of the user's gaze. Further, the gaze detection engine may be configured to access the map of remotely controllable electronic devices maintained by environment mapping engine 58. In this manner, the user's gaze vectors may be plotted on the map to determine at any time the remotely controllable device, if any, at which the user is gazing.

In FIG. 2, computer system 20 is operatively coupled to a hardware interface 60, which provides control of the various remotely controllable devices in the environment. To this end, the hardware interface transduces the control commands sent from the computer system pursuant to the user input received therein, and outputs corresponding control signals to the remotely controllable devices. In some embodiments, the hardware interface may include one or more signal transmitters- for example, infrared, radio, etc.-corresponding to the type of control signal that the remotely controllable devices are configured to receive. In other embodiments, the hardware interface may control at least some of the remotely controllable devices over a wire. In still other embodiments, the hardware interface may be configured to communicate with and control a peripheral controller device such as universal remote control transmitter 32. In this case, the hardware interface may transduce control output from the computer that switches the remotely controllable device that the transmitter is currently paired with.

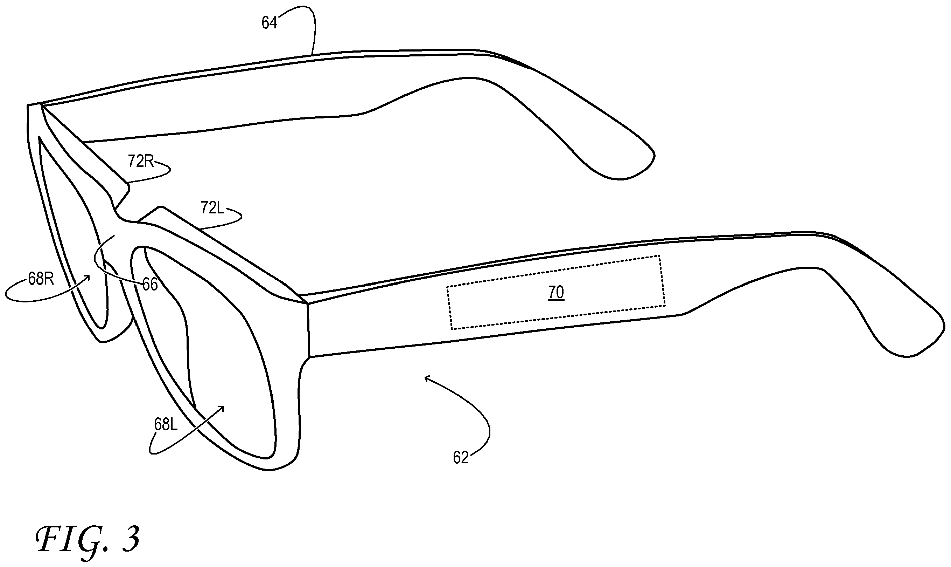

The foregoing drawings and description should not be interpreted in a limiting sense, for numerous other embodiments are contemplated as well. In some embodiments, the display or sensory componentry described above may be incorporated in eyewear or headwear worn by the user. Accordingly, FIG. 3 shows aspects of a wearable stereoscopic display system 62. The illustrated display system resembles ordinary eyewear. It includes an ear-fitting frame 64with a nose bridge 66to be positioned on the wearer's face. The display system also includes a right display window68R and a left display window68L. In some embodiments, the right and left display windows 68are wholly or partly transparent from the perspective of the wearer, to give the wearer a clear view of his or her surroundings.

In some embodiments, display imagery is transmitted in real time to display system 62 from computer system 20. Microcontroller 70of display system 62is operatively coupled to right and left optical systems 72R and 72L. In the illustrated embodiment, the microcontroller is concealed within the display-system frame, along with the right and left optical systems. The microcontroller may include suitable input/output (IO) componentry to enable it to receive display imagery from computer system 20.When display system 62 is in operation, microcontroller 70 sends appropriate control signals to right optical system72R which cause the right optical system to form a right display image in right display window68R. Likewise, the microcontroller sends appropriate control signals to left optical system72L which cause the left optical system to form a left display image in left display window68L.

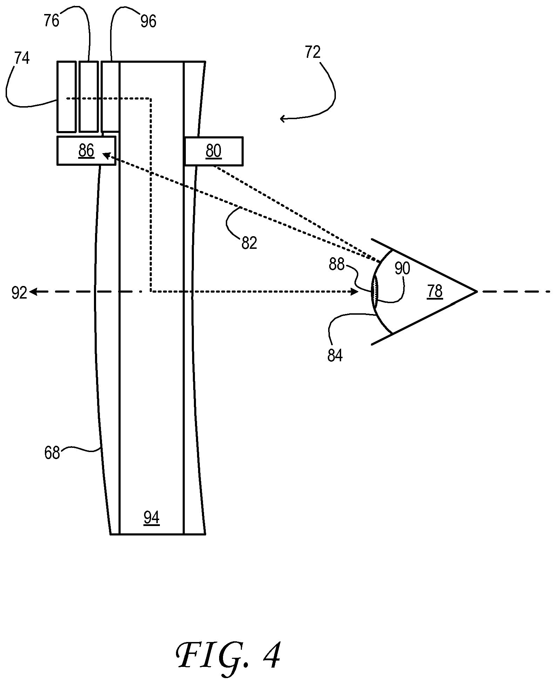

FIG. 4 shows aspects of right or left optical system72 and an associated display window68 in one, non-limiting embodiment. The optical system includes a backlight74 and a liquid-crystal display (LCD) matrix76. The backlight may include an ensemble of light-emitting diodes (LEDs)-e.g., white LEDs or a distribution of red, green, and blue LEDs. The backlight may be situated to direct its emission through the LCD matrix, which forms a display image based on control signals from microcontroller 70. The LCD matrix may include numerous, individually addressable pixels arranged on a rectangular grid or other geometry. In some embodiments, pixels transmitting red light may be juxtaposed in the matrix to pixels transmitting green and blue light, so that the LCD matrix forms a color image. The LCD matrix may be a liquid-crystal-on-silicon (LCOS) matrix in one embodiment. In other embodiments, a digital micromirror array may be used in lieu of the LCD matrix, or an active LED matrix may be used instead. In still other embodiments, scanned-beam technology may be used to form the right and left display images.

Continuing in FIG. 4, optical system 72 also includes eye-tracking componentry configured to sense a pupil position and/or an iris position of the right or left eye 78of the wearer of display system 62. In the embodiment of FIG. 4, the eye-tracking componentry takes the form of an imaging system that images light from eye lamp 80 reflected off the wearer's eye. The eye lamp may include an infrared or near-infrared LED configured to illuminate the eye. In one embodiment, the eye lamp may provide relatively narrow-angle illumination, to create a specular glint 82on the cornea 84of the eye. The imaging system includes at least one camera 86configured to image light in the emission-wavelength range of the eye lamp. This camera may be arranged and otherwise configured to capture light from the eye lamp, which is reflected from the eye. Image data from the camera is conveyed to associated logic in microcontroller 70 or in computer system 20. There, the image data may be processed to resolve such features as pupil center88, pupil outline90, and/or one or more specular glints 82from the cornea. Additionally or alternatively, the iris center or iris outline may be resolved. The locations of such features in the image data may be used as input parameters in a model-e.g., a polynomial model-that relates feature position to the gaze vector 92 of the eye.

In some cases, the display image from LCD matrix76maynot be suitable for direct viewing by the wearer of display system62. In particular, the display image may be offset from the wearer's eye, may have an undesirable vergence, and/or a very small exit pupil. In view of these issues, the display image from the LCD matrix may be further conditioned en route to the wearer's eye. In the embodiment of FIG. 4, the display image from LCD matrix76 is received into a vertical pupil expander 94 through lens 96. The vertical pupil expander lowers the display image into the wearer's field of view, and in doing so, expands the exit pupil of the display image in the 'vertical' direction. From vertical pupil expander 94, the display image is received into a horizontal pupil expander, which may be coupled into or embodied as display window 68. In other embodiments, the horizontal pupil expander may be distinct from the display window. Either way, the horizontal pupil expander expands the exit pupil of the display image in the 'horizontal' direction. By passing through the horizontal and vertical pupil expanders, the display image is presented over an area that substantially covers the eye.

The configurations described above enable various methods for gaze-based remote-device control. Some such methods are now described, by way of example, with continued reference to the above configurations. It will be understood, however, that the methods here described, and others within the scope of this disclosure, may be enabled by different configurations as well.

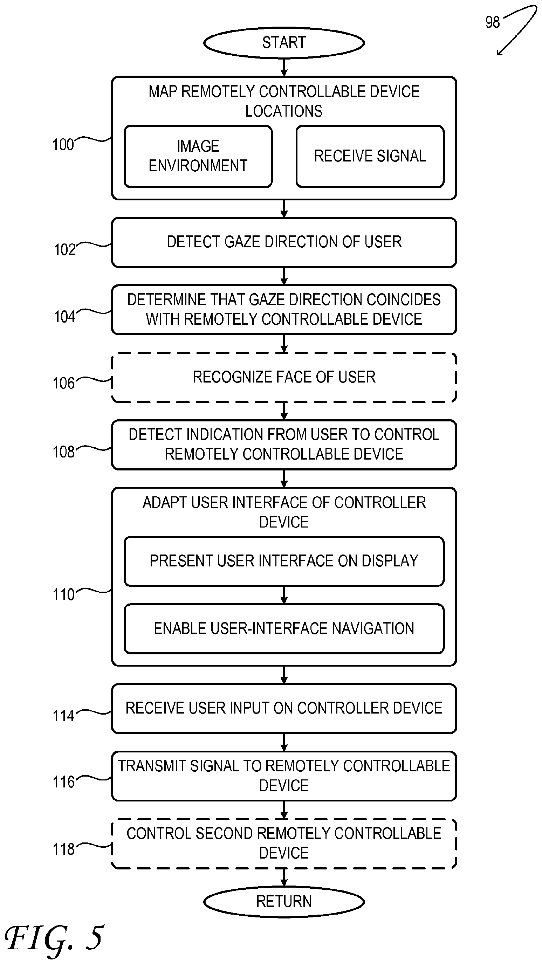

FIG. 5 illustrates an example method 98 for gaze-based control of one or more remotely controllable devices. At 100 of method 98, the locations of the one or more remotely controllable devices are mapped in data storage media of computer system 20. In one embodiment, the locations of the remotely controllable devices may be mapped via direct user input. In other words the user may enter the coordinates of one or more devices, or associate each device to its location by gazing at the devices one at a time, while identifying the device at which the user is gazing. Communicative pairing with the device also may be performed as part of this process in some embodiments. In other embodiments, the locations of the remotely controllable devices may be mapped based on image data acquired through an environment imaging system and identification of the remotely controllable devices from image data, as described above. In still other embodiments, the locations of the remotely controllable devices are mapped based on signals received in sensory componentry operatively coupled to the computer system. The signals may originate from transmitters positioned on the remotely controllable electronic devices.

At 102 a gaze direction of the user of the computer system is detected. The gaze direction may be detected by acquiring a head, face, and/or eye image of the user from one or more cameras of a vision system directed towards the user. In one embodiment, the image may define the general orientation of the user's face. In other embodiments, the image may further define certain ocular features of the user, such as the pupil centers, pupil outlines, or specular glints from the user's corneas. The head, face, and/or eye image is then analyzed in gaze detection engine 56 to compute the user's gaze vectors. In embodiments that include a display 16, the gaze for selecting a remotely controllable object may be directed to a locus outside the viewable boundary of the display.

At 104 it is determined that the current gaze direction coincides with the location of one of the remotely controllable devices whose locations have been mapped. Such a determination can be made, for example, by plotting the user's gaze vectors on the same coordinate system on which the locations of the remotely controllable devices are mapped.

At 106, the user's face may be optionally recognized by face-recognition engine 54. In some embodiments and use scenarios, remote-device control may proceed differently depending on the particular user accessing the system, as described in more detail below. Face recognition may be used, accordingly, to identify the user and thereby inform the downstream processing.

At 108, an indication from the user to control a remotely controllable device arranged in the gaze direction is detected. In one embodiment, the intent to control the remotely controllable device may be indicated simply by a dwell in the user's gaze. In other words, the user may gaze at the device for a threshold period of time, such as two seconds, five seconds, etc. to indicate the intent to control the device.

In yet other embodiments, the intent to control the remotely controllable device is signaled by way of a sideband indication. One sideband indication suitable for this purpose is the user's speech, which may be received via listening system 40 and recognized in speech-recognition engine 50. For example, the user may say "Turn on" to turn on the device at which he is gazing. Other suitable sideband indications may include a hand or body gesture from the user, as received in vision system 38 and interpreted by gesture-recognition engine 52. In one example, the user may raise a hand while looking at a remotely controllable device to indicate that he wants the device to be turned on.

At 110, a user interface of a controller device is adapted in order to enable user control of the remotely controllable device situated in the user's gaze direction. In the different embodiments of this disclosure, the nature of the adaptation of the user interface may take different forms. As noted above, various controller devices are compatible with this method. In some embodiments, the controller device may be an entertainment or game system operatively coupled to a display (e.g. a television, computer monitor, dedicated display, etc.). In that case, the adapted user interface may include a user interface of the selected remotely controllable device presented on the display. In embodiments in which an adapted user interface is presented on a display, navigation of that display is also enabled. Suitable modes of navigation include, but are not limited to, navigation by speech, navigation by hand gesture, and navigation by gaze direction. In embodiments in which the user interface is navigated based on the gaze direction of the user, the user's gaze may be directed to a locus on the display.

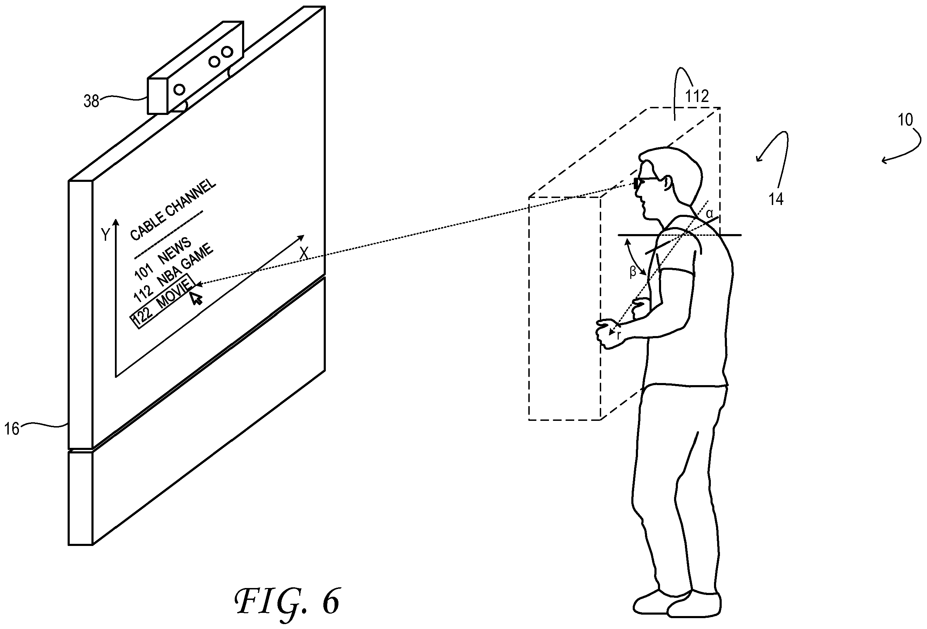

FIG. 6 illustrates a use scenario in which user 14 is navigating a UI presented on display 16 based on gaze direction or hand gesture. Based on image data from vision system 38 (or other suitable gaze detection system, e.g. on a head-mounted display), gaze detection engine 56 may be configured to compute display screen coordinates (X, Y) corresponding to the point that the user is gazing at. Likewise, gesture-detection engine 52 may be configured to compute similar coordinates based on the position of the user's hand relative to a coordinate system 112 fixed to the user's body. In this manner, the user is able to navigate among the various UI elements which are provided for control of remotely controllable device.

In other embodiments, the controller device may be a handheld device such as a universal remote control. Here, the act of adapting the user interface of the controller device may include changing the effects of the pushbuttons or other controls of the device, and in some embodiments, changing the appearance of the pushbuttons or other controls. In other embodiments, adaptation of the user interface for control of the remotely controllable device may include an adaptation other than a visual adaptation. In still other embodiments, the user interface may be non-visual. Such a user interface may rely, in whole or in part, on natural user input such as voice or gestures, as received through the vision and/or listening systems described hereinabove.

Returning now to FIG. 5, in some use scenarios a device may be controlled differently depending on the particular user which is accessing the system. It may be acceptable, for instance, for a child to be able to control a game system or a cable box, but unacceptable for the child to be able to adjust a thermostat. Moreover, some users may prefer to interact with a simpler user interface for a particular device, while other users may desire more complete control of the device. Accordingly, the detailed manner in which the user interface of the controller device is adapted, at 110, may depend on the identity of the user, as revealed by face recognition at 106, and/or other suitable biometric identification method (e.g. voice recognition). When the user's face is recognized as a child's face, for example, the system may suppress presentation of a UI for certain devices or may present a simplified UI.

At 114, input from the user is received on the controller device. In embodiments in which the controller device is an adaptable handheld device such as a universal remote control, the user input may be received via pushbuttons or other controls actuated by the user. As noted above, the effects and possibly the appearance of such controls may be adapted, at 110, according to the particular device sought to be controlled. For example, individually controllable screens provided on each remote control button may be controlled to display a current function of that button. In other non-limiting embodiments, the user input may be received in the form of a hand or body gesture, or in the form of gaze. For instance, the user interface may be adapted, at 110, to present a collection of UI elements on the display. Here, the user's gaze direction within the confines of the display may be used to activate the appropriate UI element to invoke a desired action. At 116 a signal is transmitted to the selected remotely controllable device based on the input received, with the effect of controlling the remotely controllable device.

In some scenarios, two or more remotely controllable devices may be controlled concurrently in response to the same trigger. One example scenario is when a user is streaming a movie and is interrupted by the ringing of a telephone, the telephone being somewhere in the user's environment but not on his person. This event may prompt the user to gaze in the direction of the ringing telephone, which selects the telephone as a first device to be controlled. If the user raises his hand, or says the word "answer," the system may enable remote control of the telephone in various ways-e.g., connect the telephone to the room audio, present a UI on the display to enable muting, hang-up, etc. Further, at 118, the system may also automatically pause the streaming of the movie, executing control of a second remotely controllable device, for example, the DVR or cable box. In this example, the action of pausing the movie may be accompanied by concurrent presentation of a second user interface on the display. The second user interface may, for example, offer an option to stop or resume streaming of the video.

As evident from the foregoing description, the methods and processes described herein may be tied to a computer system of one or more computing machines. Such methods and processes may be implemented as a computer-application program or service, an application-programming interface (API), a library, and/or other computer-program product.

Shown in FIG. 2 in simplified form is a non-limiting example of a computer system 20 used to support the methods and processes described herein. The computer system includes a logic machine 120 and an instruction storage machine 122. The computer system also includes a display 16, communication systems 124, and various components not shown in FIG. 2.

Each logic machine 120 includes one or more physical devices configured to execute instructions. For example, a logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

Each logic machine 120 may include one or more processors configured to execute software instructions. Additionally or alternatively, a logic machine may include one or more hardware or firmware logic machines configured to execute hardware or firmware instructions. Processors of a logic machine may be single-core or multi-core, and the instructions executed thereon may be configured for sequential, parallel, and/or distributed processing. Individual components of a logic machine optionally may be distributed among two or more separate devices, which may be remotely located and/or configured for coordinated processing. Aspects of a logic machine may be virtualized and executed by remotely accessible, networked computing devices configured in a cloud-computing configuration.

Each instruction storage machine 122 includes one or more physical devices configured to hold instructions executable by an associated logic machine 120 to implement the methods and processes described herein. When such methods and processes are implemented, the state of the instruction storage machine may be transformed-e.g., to hold different data. An instruction storage machine may include removable and/or built-in devices; it may include optical memory (e.g., CD, DVD, HD-DVD, Blu-Ray Disc, etc.), semiconductor memory (e.g., RAM, EPROM, EEPROM, etc.), and/or magnetic memory (e.g., hard-disk drive, floppy-disk drive, tape drive, MRAM, etc.), among others. An instruction storage machine may include volatile, nonvolatile, dynamic, static, read/write, read-only, random-access, sequential-access, location-addressable, file-addressable, and/or content-addressable devices.

It will be appreciated that each instruction storage machine 122 includes one or more physical devices. However, aspects of the instructions described herein alternatively may be propagated by a communication medium (e.g., an electromagnetic signal, an optical signal, etc.) that is not held by a physical device for a finite duration.

Aspects of the logic machine(s) and instruction storage machine(s) may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms 'module,' 'program,' and 'engine' may be used to describe an aspect of a computer system implemented to perform a particular function. In some cases, a module, program, or engine may be instantiated via a logic machine executing instructions held by an instruction storage machine. It will be understood that different modules, programs, and/or engines may be instantiated from the same application, service, code block, object, library, routine, API, function, etc. Likewise, the same module, program, and/or engine may be instantiated by different applications, services, code blocks, objects, routines, APIs, functions, etc. The terms 'module,' 'program,' and 'engine' may encompass individual or groups of executable files, data files, libraries, drivers, scripts, database records, etc.

Communication system 124 may be configured to communicatively couple the computer system to one or more other machines. The communication system may include wired and/or wireless communication devices compatible with one or more different communication protocols. As non-limiting examples, a communication system may be configured for communication via a wireless telephone network, or a wired or wireless local- or wide-area network. In some embodiments, a communication system may allow a computing machine to send and/or receive messages to and/or from other devices via a network such as the Internet.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

## Claims

1. A method for gaze-based remote control of various remotely controllable electronic devices (16, 20, 22, 24, 26, 28, 30) within an environment, the method comprising:
mapping the locations of said various remotely controllable electronic devices;
detecting via data from a gaze direction detector (38, 56) a gaze direction of a user;
detecting an indication from the user to control a remotely controllable device located in the gaze direction of said various electronic devices;
adapting a user interface of a controller device to enable user control of the remotely controllable device;
receiving input from the user interacting with the user interface of the controller device via gaze direction; and
transmitting a signal to the remotely controllable device based upon the input received to control the remotely controllable device.

2. The method of claim 1, wherein the controller device includes a display viewable by the user, and wherein the adapted user interface is presented on the display.

3. The method of claim 1, wherein the indication to control the remotely controllable device includes a dwell in the gaze direction.

4. The method of claim 1, wherein the indication to control the remotely controllable device includes speech.

5. The method of claim 1, wherein the indication to control the remotely controllable device includes a gesture.

6. The method of claim 1, further comprising recognizing a face of the user, wherein the user interface of the controller device is adapted differently based on the recognized face.

7. The method of claim 1, wherein the controller device comprises an entertainment system.

8. The method of claim 1, wherein the controller device comprises a handheld device.

9. The method of claim 1, wherein the remotely controllable device is a first remotely controllable device, the method further comprising concurrently controlling one or more other remotely controllable devices.

10. A system for gaze-based remote control of various remotely controllable electronic devices (16, 20, 22, 24, 26, 28, 30) within an environment, the system comprising:
a logic machine operatively coupled to an instruction storage machine, the instruction storage machine holding instructions that cause the logic machine to map the locations of said various remotely controllable electronic devices;
detect via data from a gaze direction detector (38, 56) a gaze direction of a user and to detect an indication from the user to control a remotely controllable device located in the gaze direction of said various electronic devices;
display via a display device separate from the remotely controllable device a user interface to enable user control of the remotely controllable device;
receive input from the user interacting with the user interface via gaze direction; and
transmit a signal to the remotely controllable device based on the input received, to control the remotely controllable device.

11. The system of claim 10, wherein the instructions are executable to detect the indication from the user by detecting a gaze directed to a locus outside the display.

12. The system of claim 10, wherein the instructions are executable to receive the input from the user via a gaze directed to a locus on the display.

13. The system of claim 10, wherein the display and gaze direction detector are integrated with the storage machine and logic machine in a wearable device.

## Patentansprüche

1. Verfahren für eine auf einem Blick beruhende Fernsteuerung von verschiedenen fernsteuerbaren elektronischen Vorrichtungen (16, 20, 22, 24, 26, 28, 30) innerhalb einer Umgebung, wobei das Verfahren Folgendes umfasst:
Abbilden der Orte der verschiedenen fernsteuerbaren elektronischen Vorrichtungen;
Detektieren über Daten von einem Blickrichtungsdetektor (38, 50) einer Blickrichtung eines Anwenders;
Detektieren einer Angabe von dem Anwender, um eine fernsteuerbare Vorrichtung, die sich in der Blickrichtung der verschiedenen elektronischen Vorrichtungen befindet, zu steuern;
Anpassen einer Anwenderschnittstelle einer Steuervorrichtung, um eine Anwendersteuerung der fernsteuerbaren Vorrichtung zu ermöglichen;
Empfangen einer Eingabe von dem Anwender, der mit der Anwenderschnittstelle der Steuervorrichtung über die Blickrichtung wechselwirkt; und
Senden eines Signals an die fernsteuerbare Vorrichtung anhand der empfangenen Eingabe, um die fernsteuerbare Vorrichtung zu steuern.

2. Verfahren nach Anspruch 1, wobei die Steuervorrichtung eine Anzeige enthält, die für den Anwender sichtbar ist, und wobei die angepasste Anwenderschnittstelle auf der Anzeige dargestellt wird.

3. Verfahren nach Anspruch 1, wobei die Angabe, die fernsteuerbare Vorrichtung zu steuern, eine Verweilzeit in der Blickrichtung enthält.

4. Verfahren nach Anspruch 1, wobei die Angabe, die fernsteuerbare Vorrichtung zu steuern, Sprache enthält.

5. Verfahren nach Anspruch 1, wobei die Angabe, die fernsteuerbare Vorrichtung zu steuern, eine Geste enthält.

6. Verfahren nach Anspruch 1, das ferner umfasst, ein Gesicht des Anwenders zu erkennen, wobei die Anwenderschnittstelle der Steuervorrichtung anhand des erkannten Gesichts verschieden angepasst ist.

7. Verfahren nach Anspruch 1, wobei die Steuervorrichtung ein Unterhaltungssystem umfasst.

8. Verfahren nach Anspruch 1, wobei die Steuervorrichtung eine tragbare Vorrichtung umfasst.

9. Verfahren nach Anspruch 1, wobei die fernsteuerbare Vorrichtung eine erste fernsteuerbare Vorrichtung ist, wobei das Verfahren ferner umfasst, eine oder mehrere andere fernsteuerbare Vorrichtungen gleichzeitig zu steuern.

10. System für eine auf einem Blick beruhende Fernsteuerung verschiedener fernsteuerbarer elektronischer Vorrichtungen (16, 20, 22, 24, 26, 28, 30) innerhalb einer Umgebung, wobei das System umfasst:
eine logische Maschine, die betriebsfähig an eine Anweisungsspeichermaschine gekoppelt ist, wobei die Anweisungsspeichermaschine Anweisungen hält, die bewirken,
dass die logische Maschine die Orte der verschiedenen fernsteuerbaren elektronischen Vorrichtungen abbildet;
über Daten von einem Blickrichtungsdetektor (38, 56) eine Blickrichtung eines Anwenders detektiert und eine Angabe von dem Anwender detektiert, um eine fernsteuerbare Vorrichtung, die sich in der Blickrichtung der verschiedenen elektronischen Vorrichtungen befindet, zu steuern;
über eine Anzeigevorrichtung getrennt von der fernsteuerbaren Vorrichtung eine Anwenderschnittstelle anzuzeigen, um eine Anwendersteuerung der fernsteuerbaren Vorrichtung zu ermöglichen;
eine Eingabe von dem Anwender, der mit der Anwenderschnittstelle über die Blickrichtung wechselwirkt, zu empfangen; und
ein Signal an die fernsteuerbare Vorrichtung anhand der empfangenen Eingabe zu senden, um die fernsteuerbare Vorrichtung zu steuern.

11. System nach Anspruch 10, wobei die Anweisungen ausführbar sind, um die Angabe von dem Anwender durch Detektieren eines Blicks, der auf einen Ort außerhalb der Anzeige gerichtet ist, zu detektieren.

12. System nach Anspruch 10, wobei die Anweisungen ausführbar sind, um die Eingabe von dem Anwender über einen Blick, der auf einen Ort auf der Anzeige gerichtet ist, zu empfangen.

13. System nach Anspruch 10, wobei die Anzeige und der Blickrichtungsdetektor mit der Speichermaschine und der logischen Maschine in eine tragbare Vorrichtung eingebaut sind.

## Revendications

1. Procédé pour le contrôle à distance basé sur le regard de divers dispositifs électroniques contrôlables à distance (16, 20, 22, 24, 26, 28, 30) à l'intérieur d'un environnement, le procédé comprenant :
la cartographie des emplacements desdits divers dispositifs électroniques contrôlables à distance ;
la détection par le biais de données provenant d'un détecteur de direction du regard (38, 56) d'une direction du regard d'un utilisateur ;
la détection d'une indication provenant de l'utilisateur pour contrôler un dispositif contrôlable à distance situé dans la direction du regard desdits divers dispositifs électroniques ;
l'adaptation d'une interface utilisateur d'un dispositif contrôleur pour permettre un contrôle par l'utilisateur du dispositif contrôlable à distance ;
la réception d'une entrée provenant de l'utilisateur interagissant avec l'interface utilisateur du dispositif contrôleur par le biais de la direction du regard ; et
la transmission d'un signal au dispositif contrôlable à distance sur la base de l'entrée reçue pour contrôler le dispositif contrôlable à distance.

2. Procédé de la revendication 1, dans lequel le dispositif contrôleur comporte un écran visualisable par l'utilisateur, et dans lequel l'interface utilisateur adaptée est présentée sur l'écran.

3. Procédé de la revendication 1, dans lequel l'indication pour contrôler le dispositif contrôlable à distance comporte un temps d'arrêt dans la direction du regard.

4. Procédé de la revendication 1, dans lequel l'indication pour contrôler le dispositif contrôlable à distance comporte de la parole.

5. Procédé de la revendication 1, dans lequel l'indication pour contrôler le dispositif contrôlable à distance comporte un geste.

6. Procédé de la revendication 1, comprenant en outre la reconnaissance d'un visage de l'utilisateur, dans lequel l'interface utilisateur du dispositif contrôleur est adaptée différemment sur la base du visage reconnu.

7. Procédé de la revendication 1, dans lequel le dispositif contrôleur comprend un système de divertissement.

8. Procédé de la revendication 1, dans lequel le dispositif contrôleur comprend un dispositif à main.

9. Procédé de la revendication 1, dans lequel le dispositif contrôlable à distance est un premier dispositif contrôlable à distance, le procédé comprenant en outre le contrôle simultané d'un ou plusieurs autres dispositifs contrôlables à distance.

10. Système pour le contrôle à distance basé sur le regard de divers dispositifs électroniques contrôlables à distance (16, 20, 22, 24, 26, 28, 30) à l'intérieur d'un environnement, le système comprenant :
une machine logique fonctionnellement couplée à une machine de stockage d'instructions, la machine de stockage d'instructions contenant des instructions qui conduisent la machine logique à cartographier les emplacements desdits divers dispositifs électroniques contrôlables à distance ;
détecter par le biais de données provenant d'un détecteur de direction du regard (38, 56) une direction du regard d'un utilisateur et détecter une indication provenant de l'utilisateur pour contrôler un dispositif contrôlable à distance situé dans la direction du regard desdits divers dispositifs électroniques ;
afficher par le biais d'un dispositif d'affichage séparé du dispositif contrôlable à distance une interface utilisateur pour permettre un contrôle par l'utilisateur du dispositif contrôlable à distance ;
recevoir une entrée provenant de l'utilisateur interagissant avec l'interface utilisateur par le biais de la direction du regard ; et
transmettre un signal au dispositif contrôlable à distance sur la base de l'entrée reçue, pour contrôler le dispositif contrôlable à distance.

11. Système de la revendication 10, dans lequel les instructions sont exécutables pour détecter l'indication provenant de l'utilisateur en détectant un regard dirigé vers un lieu à l'extérieur de l'écran.

12. Système de la revendication 10, dans lequel les instructions sont exécutables pour recevoir l'entrée provenant de l'utilisateur par le biais d'un regard dirigé vers un lieu sur l'écran.

13. Système de la revendication 10, dans lequel l'écran et le détecteur de direction du regard sont intégrés avec la machine de stockage et la machine logique dans un dispositif portable.
